# EUROPÄISCHE PATENTSCHRIFT

(11) **EP 3 468 834 B1**
(45) Veröffentlichungstag und Bekanntmachung des Hinweises auf die Patenterteilung: **05.08.2020**
(21) Anmeldenummer: 17728839.6
(22) Anmeldetag: 09.06.2017
(51) Int. Cl.: B60N 2/60, B60N 2/68, B60N 2/58

(54) **VORRICHTUNG UND VERFAHREN ZUR BEFESTIGUNG EINER LEHNENABDECKUNG AN EINEM FAHRZEUGSITZ**
DEVICE AND METHOD FOR FASTENING A BACKREST COVER TO A VEHICLE SEAT
DISPOSITIF ET PROCÉDÉ POUR FIXER UN CACHE DE DOSSIER SUR UN SIÈGE DE VÉHICULE

(30) Priorität: 09.06.2016 DE 102016210242
(43) Veröffentlichungstag der Anmeldung: 17.04.2019
(73) Patentinhaber: Volkswagen Aktiengesellschaft, 38440 Wolfsburg (DE)
(72) Erfinder: LINDHORST, Volker, 38104 Braunschweig (DE)
(86) Internationale Anmeldenummer: PCT/EP2017/064055
(87) Internationale Veröffentlichungsnummer: WO 2017/212005

(56) Entgegenhaltungen:
- DE-A1-102013 215 446
- JP-A- 2002 142 914
- US-A1- 2012 319 448
- US-A1- 2015 251 579

## Beschreibung

Die Erfindung betrifft eine Vorrichtung zur Befestigung einer Lehnenabdeckung an einem Fahrzeugsitz mit den Merkmalen gemäß den Patentansprüchen.

Beispielsweise gemäß der DE 10 2013 112 699 A1 ist es Stand der Technik, eine Lehnenabdeckung an einem Fahrzeugsitz dadurch zu befestigen, dass an der dem Fahrzeugsitz zugewandten Seite der Lehnenabdeckung Befestigungselemente in Form von Rasthaken angeordnet sind, welche in Befestigungslöcher eingreifen, die im Lehnenrahmen des Fahrzeugsitzes vorgesehen sind. Das bietet gute Möglichkeiten, Toleranzen des Lehnenrahmens in der Höhe auszugleichen. Diese Toleranzen können bis zu ± 3 mm in der Metallstruktur des Lehnenrahmens betragen. Von Nachteil ist es jedoch, dass die Rasthaken aus Festigkeitsgründen sehr groß sein müssen, bezogen auf den Lehnenrahmen. Große Rasthaken benötigen allerdings große Befestigungslöcher im Lehnenrahmen. Große Befestigungslöcher im Lehnenrahmen beeinträchtigen wiederum dessen Festigkeit. Dem könnte durch den Einsatz von zusätzlichem Material begegnet werden, was jedoch wiederum teuer und schwer ist. Darüber hinaus bietet die Metallstruktur des Lehnenrahmens häufig überhaupt keine Möglichkeit, große Befestigungslöcher einzubringen, da diese so konstruiert ist, dass sowohl Festigkeits- als auch Gewichtsanforderungen erfüllt werden.

Weiterhin ist es gemäß der DE 10 2007 010 961 A1 bekannt, eine rückwärtige Lehnenabdeckung eines Fahrzeugsitzes mittels eines federnden Elementes mechanisch an dem Fahrzeugsitz zu befestigen. Das federnde Element ist als U-Feder ausgestaltet. An dem offenen Ende des federnden Elementes ist ein Haken angeordnet. Dieser Haken wird zur Befestigung der Lehnenabdeckung an dem Fahrzeugsitz über ein Rahmenteil des Fahrzeugsitzes geführt, so dass der Haken das Rahmenteil umgreift. Gute Möglichkeiten, Toleranzen des Lehnenrahmens in der Höhe auszugleichen, sind nicht gegeben.

JP 2002 142914 A offenbart eine Vorrichtung zur Befestigung einer Lehnenabdeckung an einem Fahrzeugsitz. Die Lehnenabdeckung weist zumindest ein Rastelement auf, welches in einen Fahrzeugsitz zur Herstellung einer Verbindung zwischen den Abdeckungen und Fahrzeugsitz eingreift. Das Rastelement ist durch Zugfedern mit einer Federkraft beaufschlagt. Die Zugfedern greifen einerseits am Rastelement und andererseits an dem Führungselement an und umgreifen hierbei sowohl eine Kontaktfläche des Rastelementes als auch das entsprechende Gegenelemente des Fahrzeugsitzes.

Denkbar ist alternativ der Einsatz von Verschraubungen zur Befestigung einer Lehnenabdeckung an einem Fahrzeugsitz. Verschraubungen setzen jedoch auch die Einhaltung gewisser Toleranzen voraus und sind in der Massenfertigung von Nachteil, da deren Herstellung zeitaufwendig ist.

Der Erfindung liegt nun die Aufgabe zugrunde, eine Möglichkeit bereitzustellen, eine Lehnenabdeckung sicher, passgenau und fehlertolerant an einem Fahrzeugsitz zu befestigen.

Diese Aufgabe wird erfindungsgemäß dadurch gelöst, dass zur Befestigung einer Lehnenabdeckung an einem Fahrzeugsitz die Lehnenabdeckung zumindest ein Rastelement aufweist, das zur Herstellung einer Verbindung zwischen Lehnenabdeckung und Fahrzeugsitz an dem / in dem Fahrzeugsitz eingreift, wobei das Rastelement mit einer Federkraft beaufschlagt ist, die Lehnenabdeckung auf der dem Fahrzeugsitz zugewandten Seite ein Führungselement aufweist und das Rastelement gegenüber der Lehnenabdeckung entlang des Führungselementes beweglich ist.

Das Führungselement ist gleichzeitig ein Widerlager für ein Federelement für eine Beaufschlagung des Rastelementes mit einer Federkraft. Das Federelement ist eine Druckfeder. Auf diese Weise werden verschiedene Funktionen in einem Bauteil kombiniert, was Platz und Aufwand spart.

Mit anderen Worten ist das zumindest eine Rastelement beziehungsweise ist der zumindest eine Rasthaken, mit dem die Lehnenabdeckung in einem Montageschritt an dem Fahrzeugsitz befestigt wird, schwimmend an der Lehnenabdeckung gelagert. Dabei ist das Rastelement entlang einer durch das Führungselement definierten Führungsbahn beweglich. Dadurch, dass das federbelastete Rastelement schwimmend gelagert ist, müssen keine Befestigungslöcher/Durchbrüche im Fahrzeugsitz vorgesehen werden. Das federbelastete Rastelement greift einfach am beziehungsweise im Fahrzeugsitz ein, bevorzugt am Innenumfang des Lehnenrahmens des Fahrzeugsitzes. Folglich ist es nicht notwendig, enge Toleranzen einzuhalten, um einen mangelnden Festsitz der Lehnenabdeckung am Fahrzeugsitz zu verhindern. Vielmehr werden vorhandene Toleranzen, beispielsweise ein an der oberen Toleranzgrenze liegender Innenumfang des Fahrzeugsitzes beziehungsweise des Lehnenrahmens, durch die schwimmende Lagerung des Rastelements ausgeglichen. Dadurch, dass das Rastelement entlang einer definierten Führungsbahn geführt wird, ist ein Eingreifen und dauerhaftes Verbleiben des Rastelements in einem bestimmten Bereich des Fahrzeugsitzes beziehungsweise des Lehnenrahmens sichergestellt. Mit anderen Worten wird so die Lehnenabdeckung sicher befestigt. Durch die definierte Führungsbahn kann weiterhin den wechselnden Gegebenheiten bei unterschiedlichen Sitzen gezielt Rechnung getragen werden. Denkbar könnte es sein, die Führungsbahn zu neigen oder zu krümmen. Jedenfalls ist somit die erfindungsgemäße Vorrichtung zudem sehr flexibel. Der Einsatz großer und stabiler Rasthaken ist problemlos möglich.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: einen Fahrzeugsitz in einer Ansicht von hinten,
- Figur 2: die dem Fahrzeugsitz zugewandte Seite einer Lehnenabdeckung,
- Figur 3: das Rastelement im Detail,
- Figur 4: das Rastelement noch mehr im Detail, und
- Figur 5: das eingerastete Rastelement.

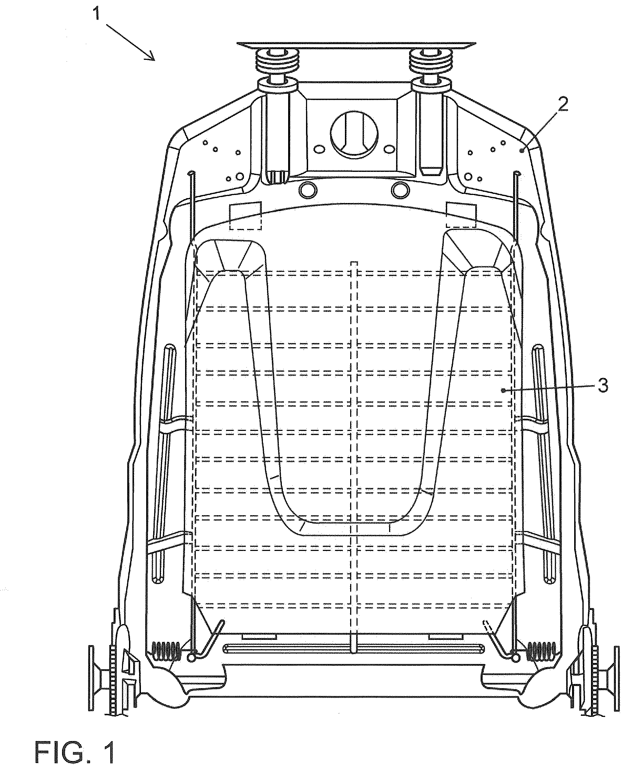

Figur 1 zeigt einen Fahrzeugsitz 1 in einer Ansicht von hinten mit einem Lehnenrahmen 2 und einer Lehnenabdeckung 3. Die Lehnenabdeckung 3 ist insbesondere an der rückwärtigen Seite des Fahrzeugsitzes 1 angeordnet. Der Fahrzeugsitz 1 weist, wie allgemein bekannt, eine Sitz- und Lehnenfläche beziehungsweise eine Polsterung auf, was jedoch nicht gezeigt ist. Ein solcher Fahrzeugsitz 1 kann in jedem möglichen Fahrzeug eingesetzt werden, sei es ein Automobil, ein Flugzeug oder ein Boot.

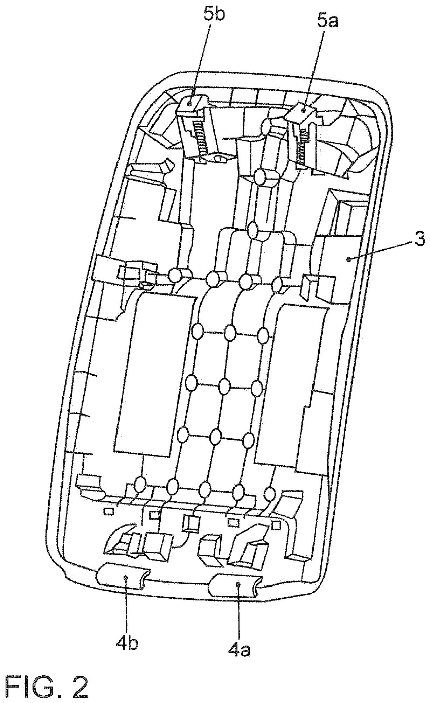

Figur 2 zeigt die dem Fahrzeugsitz 1 beziehungsweise dem Lehnenrahmen 2 zugewandte Seite der Lehnenabdeckung 3. Die Lehnenabdeckung 3 ist insbesondere schalenförmig und formstabil. Die Lehnenabdeckung 3 umfasst Einschubelemente 4a und 4b, welche zur Befestigung der Lehnenabdeckung 3 am Fahrzeugsitz 1 in den Fahrzeugsitz 1 beziehungsweise in den Lehnenrahmen 2 eingreifen. Dazu sind die Einschubelemente 4a und 4b an ihren dem Fahrzeugsitz 1 zugewandten Enden hakenförmig ausgebildet. Die Anzahl der Einschubelemente 4a bis 4n ist beliebig, es kann auch nur ein Einschubelement 4a vorgesehen sein. Jedenfalls wird mittels der Einschubelemente 4a und 4b eine formschlüssige Verbindung zwischen dem Fahrzeugsitz 1 beziehungsweise dem Lehnenrahmen 2 und der Lehnenabdeckung 3 ermöglicht. Die Einschubelemente 4a und 4b sind bevorzugt im unteren Bereich der Lehnenabdeckung 3 positioniert. Die Lehnenabdeckung 3 umfasst weiterhin Rastelemente 5a und 5b, welche zur Befestigung der Lehnenabdeckung 3 an dem Fahrzeugsitz 1 eben an dem Fahrersitz 1 eingreifen/einrasten oder in den Fahrzeugsitz 1 eingreifen/einrasten oder in den Lehnenrahmen 2 des Fahrersitzes 1, insbesondere in den Innenumfang des zumindest teilweise ringförmig ausgebildeten Lehnenrahmens 2, eingreifen/einrasten. Mittels der Rastelemente 5a und 5b wird ebenfalls eine formschlüssige Verbindung zwischen dem Fahrzeugsitz 1 beziehungsweise dem Lehnenrahmen 2 und der Lehnenabdeckung 3 ermöglicht. Die Anzahl der Rastelemente 5a bis 5n ist beliebig. Die Lehnenabdeckung 3 kann beispielsweise lediglich ein Rastelement 5a aufweisen. Die Lehnenabdeckung 3 kann auch vier Rastelemente 5a bis 5d aufweisen.

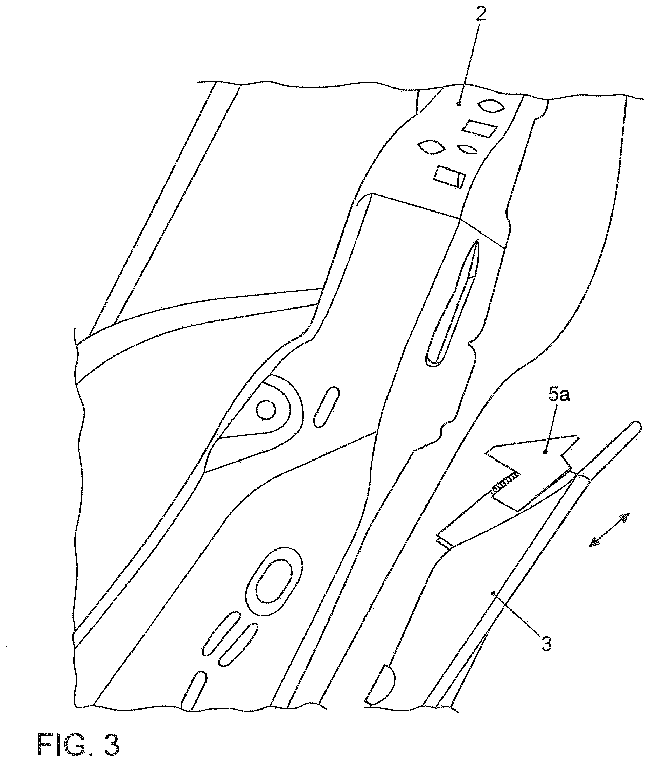

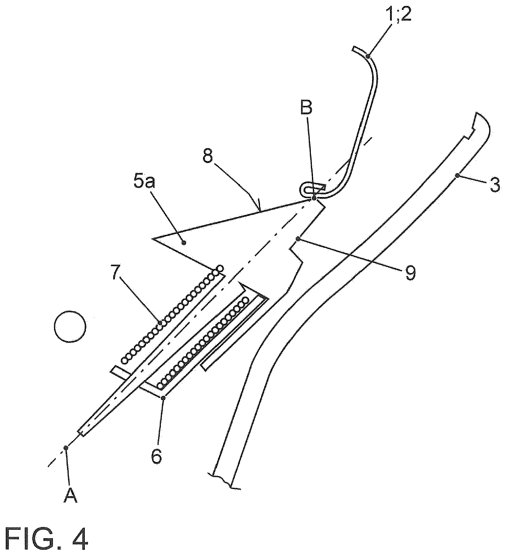

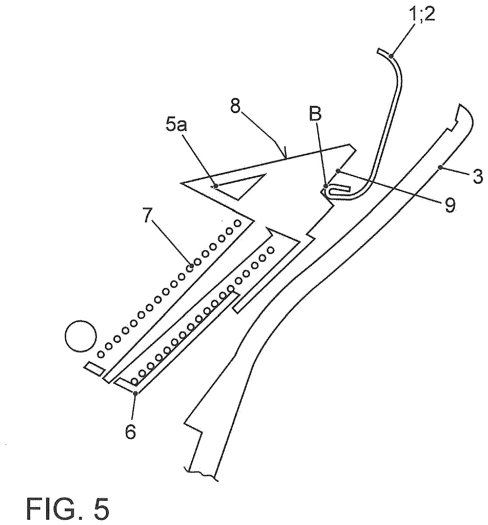

Figur 3 zeigt ein Rastelement 5a mehr im Detail und in seinem Zusammenwirken mit der Lehnenabdeckung 3 und dem Lehnenrahmen 2 beziehungsweise dem Fahrzeugsitz 1. Gemäß Figur 3 greifen die Einschubelemente 4a bis 4n in den Fahrzeugsitz 1 beziehungsweise den Lehnenrahmen 2, bevorzugt in den Innenumfang des Lehnenrahmens 2, ein und stellen eine erste formschlüssige Verbindung zwischen Lehnenabdeckung 3 und Lehnenrahmen 2 beziehungsweise Fahrzeugsitz 1 her (nicht gezeigt). Das Rastelement 5a ist gegenüber der Lehnenabdeckung 3 beweglich ausgeführt, das heißt schwimmend gelagert, und mit einer Federkraft beaufschlagt. Insbesondere ist das Rastelement 5a derart gegenüber der Lehnenabdeckung 3 beweglich ausgeführt, dass das Rastelement 5a eine Bewegung entlang einer geraden Linie ausführt, wie in Figur 3 durch einen Doppelpfeil angedeutet ist. Das Rastelement 5a wird entlang eines Führungselementes 6 geführt und wirkt mit einer Feder 7 zusammen, wie im Zusammenhang mit den Figuren 4 und 5 beschrieben wird.

Figur 4 zeigt ein Rastelement 5a noch mehr im Detail, insbesondere im Zusammenwirken mit der Lehnenabdeckung 3 und dem Lehnenrahmen 2 beziehungsweise dem Fahrzeugsitz 1. Erfindungsgemäß weist die Lehnenabdeckung 3 auf der dem Fahrzeugsitz 1 zugewandten Seite ein Führungselement 6 auf. Das Führungselement 6 umfasst insbesondere eine Ebene beziehungsweise eine Fläche oder eine Bahn, entlang der das Rastelement 5a gegenüber der Lehnenabdeckung 3 beweglich ist / geführt wird, bevorzugt geradlinig beweglich ist / geführt wird. Insbesondere gleitet das Rastelement 5a entlang des Führungselementes 6 infolge der Federbelastung, steht also mit dem Führungselement 6 in Kontakt und wird durch das Führungselement 6 geleitet beziehungsweise geführt bewegt. Das Führungselement 6 ist an die Lehnenabdeckung 3 angeformt beziehungsweise Teil der Lehnenabdeckung 3 oder die Lehnenabdeckung 3 selbst. Das Führungselement 6 ist bevorzugt gleichzeitig Widerlager für ein Federelement 7 für eine Beaufschlagung des Rastelementes 5a mit einer Federkraft. Das Federelement 7 ist bevorzugt eine Druckfeder, beispielsweise mit einem zylindrischen Querschnitt. Das Rastelement 5a weist eine Kontaktfläche 8 auf. Die Kontaktfläche 8 ist an dem Rastelement 5a in einem Endbereich angeordnet, welcher in Richtung der auf das Rastelement 5a wirkenden Federkraft weist. Die Kontaktfläche 8 ist ferner dem Fahrzeugsitz 1 beziehungsweise dem Lehnenrahmen 2 zugewandt. Die Kontaktfläche 8 ist darüber hinaus gegenüber der Längsachse A des Rastelementes 5a geneigt. Das Rastelement 5a weist weiterhin einen Rastbereich 9 auf, welcher gegenüber der Kontaktfläche 8 vorgesehen ist, ebenfalls in einem Endbereich des Rastelementes 5a, welcher in Richtung der auf das Rastelement 5a wirkenden Kraft weist. Der Rastbereich 9 ist bevorzugt abgestuft. Dazu ist das Rastelement 5a in Richtung der Kontaktfläche 8 ausgenommen.

In Figur 4 ist das Rastelement 5a in einem eingefederten Zustand gezeigt. Außerdem greifen die Einschubelemente 4a bis 4n in den Fahrzeugsitz 1 beziehungsweise den Lehnenrahmen 2 ein und stellen eine erste formschlüssige Verbindung zwischen Lehnenabdeckung 3 und Lehnenrahmen 2 beziehungsweise Fahrzeugsitz 1 her. Das Rastelement 5a ist deshalb eingefedert beziehungsweise mit einer vergleichsweise großen Federkraft beaufschlagt, weil die Lehnenabdeckung 3 und somit das Rastelement 5a in Richtung des Fahrzeugsitzes 1 bewegt wurde, so dass die Kontaktfläche 8 und der Fahrzeugsitz 1 beziehungsweise der Lehnenrahmen 2 zunächst im Kontaktbereich B in Kontakt gebracht wurden und im weiteren Verlauf das Rastelement 5a infolge der Neigung der Kontaktfläche 8 derart entlang des Führungselementes 6 bewegt wird, da der Lehnenrahmen 2 feststeht, dass die Länge der Feder beeinflusst (hier verkürzt) wird. Zur endgültigen Befestigung der Lehnenabdeckung 3 an dem Lehnenrahmen 2 beziehungsweise dem Fahrzeugsitz 1 federt das Rastelement 5a wieder aus und geht in eine Endposition, wobei eine gewisse Beaufschlagung mit der Federkraft bestehen bleibt, so dass Toleranzen zwischen Lehnenabdeckung 3 und Fahrzeugsitz 1/Lehnenrahmen 2 ausgeglichen werden und das Rastelement 5a sicher und dauerhaft so verharrt. Dieses Ausfedern erfolgt dadurch, dass der Lehnenrahmen 2 im Kontaktbereich B den Kontakt zur Kontaktfläche 8 verliert, die Lehnenabdeckung 3 einschließlich dem Rastelement 5a weiter in Richtung des Fahrzeugsitzes 1 bewegt wird und die Federkraft das nunmehr nicht mehr in seiner Längenausdehnung durch den Kontakt mit dem Lehnenrahmen 2 behinderte Rastelement 5a freigibt. Jedenfalls kommt der Bereich B des Lehnenrahmens 2 im abgestuften Rastbereich 9 zum Stillstand, das heißt rastet ein. Das ist in Figur 5 gezeigt. Somit ist eine weitere formschlüssige Verbindung zwischen Lehnenabdeckung 3 und Lehnenrahmen 2 beziehungsweise Fahrzeugsitz 1 hergestellt.

### Bezugszeichenliste

- 1: Fahrzeugsitz
- 2: Lehnenrahmen
- 3: Lehnenabdeckung
- 4a, 4b, 4n: Einschubelement
- 5a, 5b, 5n: Rastelement
- 6: Führungselement
- 7: Federelement
- 8: Kontaktfläche
- 9: Rastbereich
- A: Längsachse
- B: Kontaktbereich

## Patentansprüche

1. Vorrichtung mit einer Lehnenabdeckung zur Befestigung der Lehnenabdeckung (3) an einem Fahrzeugsitz (1), wobei die Lehnenabdeckung (3) zumindest ein Rastelement (5a, 5b, 5n) aufweist, welches zur Herstellung einer Verbindung zwischen Lehnenabdeckung (3) und Fahrzeugsitz (1) in den Fahrzeugsitz (1) eingreifen kann, wobei das Rastelement (5a, 5b, 5n) mit einer Federkraft beaufschlagt ist, die Lehnenabdeckung (3) auf der dem Fahrzeugsitz (1) zugewandten Seite ein Führungselement (6) aufweist und das Rastelement (5a, 5b, 5n) gegenüber der Lehnenabdeckung (3) entlang des Führungselementes (6) geführt ist, das Führungselement (6) eine Fläche aufweist, entlang der das Rastelement (5a, 5b, 5n) gegenüber der Lehnenabdeckung (3) geführt ist, das Rastelement (5a, 5b, 5n) gegenüber der Lehnenabdeckung (3) entlang des Führungselementes (6) geradlinig geführt ist, das Führungselement (6) an die Lehnenabdeckung (3) angeformt ist, **dadurch gekennzeichnet, dass**
das Führungselement (6) zusätzlich ein Widerlager für ein Federelement (7) für eine Beaufschlagung des Rastelementes (5a, 5b, 5n) mit einer Federkraft aufweist, und das Federelement (7) eine Druckfeder ist.

2. Vorrichtung nach Anspruch 1, **dadurch gekennzeichnet, dass** die Lehnenabdeckung (3) Einschubelemente (4a, 4b, 4n) aufweist, welche zur Befestigung der Lehnenabdeckung (3) am Fahrzeugsitz (1) in den Fahrzeugsitz (1) eingreifen können, so dass mittels der Einschubelemente (4a, 4b, 4n) eine erste formschlüssige Verbindung zwischen dem Fahrzeugsitz (1) und der Lehnenabdeckung (3) hergestellt wird und mittels des zumindest einen Rastelementes (5a, 5b, 5n), das ebenfalls in den Fahrzeugsitz (1) eingreifen kann, eine zweite formschlüssige Verbindung zwischen dem Fahrzeugsitz (1) und der Lehnenabdeckung (3) hergestellt werden kann.

3. Vorrichtung nach Anspruch 2, **dadurch gekennzeichnet, dass** das zumindest eine Rastelement (5a, 5b, 5n) in den Lehnenrahmen (2) des Fahrzeugsitzes (1) eingreifen kann und/oder die Einschubelemente (4a, 4b, 4n) in den Lehnenrahmen (2) des Fahrzeugsitzes (1) eingreifen können.

4. Vorrichtung nach den Ansprüchen 1 bis 3, **dadurch gekennzeichnet, dass** das zumindest eine Rastelement (5a, 5b, 5n) eine Kontaktfläche (8) aufweist, die an dem Rastelement (5a, 5b, 5n) in einem Endbereich angeordnet ist, welcher in Richtung der auf das Rastelement (5a, 5b, 5n) wirkenden Federkraft weist, wobei die Kontaktfläche (8) dem Fahrzeugsitz (1) zugewandt ist und gegenüber der Längsachse (A) des Rastelementes (5a, 5b, 5n) geneigt ist sowie das Rastelement (5a, 5b, 5n) weiterhin einen Rastbereich (9) aufweist, welcher gegenüber der Kontaktfläche (8) vorgesehen ist, ebenfalls in einem Endbereich des Rastelementes (5a), welcher in Richtung der auf das Rastelement (5a, 5b, 5n) wirkenden Federkraft weist, wobei der Rastbereich (9) abgestuft ist.

## Claims

1. Device with a backrest cover for fastening the backrest cover (3) to a vehicle seat (1), wherein the backrest cover (3) has at least one latching element (5a, 5b, 5n) which can engage in the vehicle seat (1) in order to produce a connection between the backrest cover (3) and the vehicle seat (1), wherein the latching element (5a, 5b, 5n) is acted upon with a spring force, the backrest cover (3) has a guide element (6) on the side facing the vehicle seat (1), and the latching element (5a, 5b, 5n) is guided in relation to the backrest cover (3) along the guide element (6), the guide element (6) has a surface along which the latching element (5a, 5b, 5n) is guided in relation to the backrest cover (3), the latching element (5a, 5b, 5n) is guided rectilinearly in relation to the backrest cover (3) along the guide element (6), and the guide element (6) is integrally formed on the backrest cover (3), **characterized in that** the guide element (6) additionally has an abutment for a spring element (7) for acting upon the latching element (5a, 5b, 5n) with a spring force, and the spring element (7) is a compression spring.

2. Device according to Claim 1, **characterized in that** the backrest cover (3) has insertion elements (4a, 4b, 4n) which can engage in the vehicle seat (1) in order to fasten the backrest cover (3) to the vehicle seat (1), and therefore a first form-fitting connection is produced between the vehicle seat (1) and the backrest cover (3) by means of the insertion elements (4a, 4b, 4n) and a second form-fitting connection can be produced between the vehicle seat (1) and the backrest cover (3) by means of the at least one latching element (5a, 5b, 5n) which can likewise engage in the vehicle seat (1).

3. Device according to Claim 2, **characterized in that** the at least one latching element (5a, 5b, 5n) can engage in the backrest frame (2) of the vehicle seat (1), and/or the insertion elements (4a, 4b, 4n) can engage in the backrest frame (2) of the vehicle seat (1) .

4. Device according to Claims 1 to 3, **characterized in that** the at least one latching element (5a, 5b, 5n) has a contact surface (8) which is arranged on the latching element (5a, 5b, 5n) in an end region which points in the direction of the spring force acting on the latching element (5a, 5b, 5n), wherein the contact surface (8) faces the vehicle seat (1) and inclines in relation to the longitudinal axis (A) of the latching element (5a, 5b, 5n), and the latching element (5a, 5b, 5n) furthermore has a latching region (9) which is provided opposite the contact surface (8), likewise in an end region of the latching element (5a) that points in the direction of the spring force acting on the latching element (5a, 5b, 5n), wherein the latching region (9) is set.

## Revendications

1. Dispositif comprenant un recouvrement de dossier pour la fixation du recouvrement de dossier (3) à un siège de véhicule (1), le recouvrement de dossier (3) présentant au moins un élément d'encliquetage (5a, 5b, 5n) qui peut s'engager dans le siège de véhicule (1) pour établir une liaison entre le recouvrement de dossier (3) et le siège de véhicule (1), l'élément d'encliquetage (5a, 5b, 5n) étant sollicité avec une force de ressort, le recouvrement de dossier (3) présentant un élément de guidage (6) sur le côté tourné vers le siège de véhicule (1) et l'élément d'encliquetage (5a, 5b, 5n) étant guidé par rapport au recouvrement de dossier (3) le long de l'élément de guidage (6), l'élément de guidage (6) présentant une surface le long de laquelle l'élément d'encliquetage (5a, 5b, 5n) est guidé par rapport au recouvrement de dossier (3), l'élément d'encliquetage (5a, 5b, 5n) étant guidé en ligne droite par rapport au recouvrement de dossier (3) le long de l'élément de guidage (6), l'élément de guidage (6) étant façonné sur le recouvrement de dossier (3), **caractérisé en ce que** l'élément de guidage (6) présente en outre une butée pour un élément de ressort (7) pour une sollicitation de l'élément d'encliquetage (5a, 5b, 5n) avec une force de ressort et l'élément de ressort (7) est un ressort de compression.

2. Dispositif selon la revendication 1, **caractérisé en ce que** le recouvrement de dossier (3) présente des éléments d'enfoncement (4a, 4b, 4n) qui peuvent s'engager dans le siège de véhicule (1) pour fixer le recouvrement de dossier (3) au siège de véhicule (1) de telle sorte qu'une première liaison par engagement par correspondance de formes entre le siège de véhicule (1) et le recouvrement de dossier (3) soit établie au moyen des éléments d'enfoncement (4a, 4b, 4n) et qu'une deuxième liaison par engagement par correspondance de formes entre le siège de véhicule (1) et le recouvrement de dossier (3) puisse être établie au moyen de l'au moins un élément d'encliquetage (5a, 5b, 5n) qui peut également s'engager dans le siège de véhicule (1).

3. Dispositif selon la revendication 2, **caractérisé en ce que** l'au moins un élément d'encliquetage (5a, 5b, 5n) peut s'engager dans le cadre de dossier (2) du siège de véhicule (1) et/ou les éléments d'enfoncement (4a, 4b, 4n) peuvent s'engager dans le cadre de dossier (2) du siège de véhicule (1).

4. Dispositif selon les revendications 1 à 3, **caractérisé en ce que** l'au moins un élément d'encliquetage (5a, 5b, 5n) présente une surface de contact (8) qui est disposée au niveau de l'élément d'encliquetage (5a, 5b, 5n) dans une région d'extrémité qui est tournée dans la direction de la force de ressort agissant sur l'élément d'encliquetage (5a, 5b, 5n), la surface de contact (8) étant tournée vers le siège de véhicule (1) et étant inclinée par rapport à l'axe longitudinal (A) de l'élément d'encliquetage (5a, 5b, 5n) et l'élément d'encliquetage (5a, 5b, 5n) présentant en outre une région d'encliquetage (9) qui est prévue par rapport à la surface de contact (8) également dans une région d'extrémité de l'élément d'encliquetage (5a) qui est tournée dans la direction de la force de ressort agissant sur l'élément d'encliquetage (5a, 5b, 5n), la région d'encliquetage (9) étant étagée.
